# EUROPÄISCHE PATENTANMELDUNG

(11) **EP 1 615 022 A1**
(43) Veröffentlichungstag der Anmeldung: **11.01.2006**
(21) Anmeldenummer: 05090146.1
(22) Anmeldetag: 19.05.2005
(51) Int. Cl.: G01N 27/26, G01N 33/00

(54) **Reaktorenarray zum Testen von Oberflächenreaktionen**

(30) Priorität: 18.06.2004 DE 102004030524
(71) Anmelder: SIEMENS AKTIENGESELLSCHAFT, 80333 München (DE)
(72) Erfinder: Krüger, Ursus, 14089 Berlin (DE); Ullrich, Raymond, 14621 Schönwalde (DE); Winkler, Gabriele, 13587 Berlin (DE)

(57) **Zusammenfassung**

Die Erfindung betrifft ein Reaktorenarray in einer Trägerplatte (12) mit Reaktionsräumen (13), die über eine Kontaktseite (16) mit der Oberfläche (17) eines Bauteils (18) in Verbindung stehen. Durch Befüllung der Reaktionsräume (13) mit einem Reaktionsmedium (20) können parallel verschiedene Testreaktionen an der Oberfläche (17) durchgeführt werden, um beispielsweise optimale Reaktionsparameter für eine bestimmte Reaktion zu ermitteln. Erfindungsgemäß ist vorgesehen, die Reaktionsräume (13) zumindest mit einer Gegenelektrode (15), insbesondere auch mit einer Referenzelektrode (25) auszustatten, damit durch Einstellen der Potenziale (P) an dem Werkstück als Arbeitselektrode und (P1, P2) an den Gegenelektroden als Versuchsparameter das anliegende Potenzial für in den Reaktionsräumen (13) ablaufende elektrochemische Reaktionen verändert werden kann. Die Referenzelektroden (25) erlauben dabei vorteilhaft eine Potenzialsteuerung der ablaufenden Reaktionen. Mit dem Reaktorenarray lassen sich vorteilhaft beispielsweise die elektrochemischen Reaktionsbedingungen für das Entschichten und anschließende Beschichten von gebrauchten Turbinenschaufeln ermitteln.

## Beschreibung

Die Erfindung betrifft ein Reaktorenarray zum Testen von Reaktionen eines Reaktionsmediums mit einer Oberfläche bei unterschiedlichen Reaktionsparametern, aufweisend eine Trägerplatte mit einer Kontaktseite für die Oberfläche, in der Reaktionsräume der Reaktoren mit zur Kontaktfläche gerichteten Reaktionsöffnungen ausgebildet sind, wobei die Reaktionsöffnungen eine Abdichtung für die Oberfläche aufweisen.

Ein Reaktorenarray der eingangs genannten Art ist beispielsweise in der US 6,605,258 B2 beschrieben und wird für ein so genanntes high throughput sceening zur Ermittlung der optimalen Reaktionsbedingungen für die Entfernung ungewünschter Schichten von Turbinenschaufeln verwendet. Zu diesem Zweck wird auf die Oberfläche der Turbinenschaufel zunächst eine abdichtende Kontaktmaske gelegt, deren Reaktionsöffnungen mit einem Array von Reaktionsräumen in einer Trägerplatte kommuniziert. In diese Trägerplatte können die zu testenden Mischungen aus flüssigen Reaktionsmedien eingefüllt werden und danach die Trägerplatte mit einer Deckelstruktur verschlossen werden. Nach der Durchführung der zu testenden Reaktionen kann das Reaktionsmedium aus den Reaktionsräumen entfernt und das Reaktorenarray von der Oberfläche der Turbinenschaufel abgehoben werden. Eine nachfolgende Untersuchung der erzielten Reaktionsergebnisse auf der Oberfläche lässt einen Rückschluss auf die optimale Mischung der Reaktionsmedien zu. Durch den hohen Grad der Parallelisierung von Reaktionen wird beim Auffinden der optimalen Reaktionsbedingungen (Screening) ein hoher Durchsatz (high throughput) bei der Modifikation der Reaktionsbedingungen erreicht.

Weiterhin ist es bekannt (beispielsweise aus US 5,643,742, DE 102 48 209 A1, WO 99/66 329 A1, WO 99/19 729 A1, WO 00/62 047 A1, WO 00/62 048 A2, EP 1 136 819 A2, WO 03/038 423 A2), in Arrays von Reaktionsräumen Sensoren vorzusehen, die mittels zweier Elektroden in den einzelnen Reaktionsräumen ein elektrisches Sensorsignal generieren. Dieses soll die in den Reaktionsräumen ablaufenden Reaktionen möglichst wenig beeinflussen, so dass die durchgeführten Messungen die angestrebten Reaktionsergebnisse nicht verfälschen.

Aufgabe der Erfindung ist es, ein Reaktorenarray anzugeben, mit dem die Reaktionsbedingungen in den einzelnen Reaktoren vergleichsweise einfach modifiziert werden können.

Diese Aufgabe wird erfindungsgemäß dadurch gelöst, dass die Reaktionsräume mit jeweils einer Gegenelektrode ausgestattet sind, wobei die Gegenelektroden zumindest in Gruppen unabhängig voneinander elektrisch ansteuerbar sind. Besonders vorteilhaft ist es selbstverständlich, wenn jede einzelne der Gegenelektroden unabhängig voneinander elektrisch ansteuerbar ist. Durch das erfindungsgemäße Vorsehen von Gegenelektroden in jedem der Reaktionsräume können vorteilhaft auch Reaktionen nach dem Verfahren des high throughput screening durchgeführt werden, welche durch Anlegen eines elektrischen Potenzials in den ablaufenden elektrochemischen Reaktionen beeinflusst werden müssen. Dabei wird die Arbeitselektrode durch die Oberfläche gebildet, die zwecks Ausbildung bestimmter Reaktionen mit dem Reaktorenarray in Verbindung gebracht wird. Die einzeln ansteuerbaren Gegenelektroden ermöglichen die Einstellung unterschiedlicher Potenziale gegenüber der als Arbeitselektrode zum Einsatz kommenden Oberfläche, wodurch die Reaktionsbedingungen einfach modifiziert werden können. Mit dem erfindungsgemäßen Verfahren können beispielsweise Korrosionsuntersuchungen von Oberflächen durchgeführt werden, deren Abtragungsrate durch Anlegen geeigneter Potenziale beschleunigt wird. In diesen Fällen wirkt die Arbeitselektrode als Anode. Dies ist z. B. auch bei der Entschichtung von Turbinenschaufeln der Fall, wobei die Zielstellung der ablaufenden Reaktionen ist, dass die Beschichtungen der Turbinenschaufel inklusive betriebsbedingt gebildeter Oxidschichten möglichst schnell aufgelöst werden, ohne dabei das Grundmaterial der Turbinenschaufel anzugreifen.

Selbstverständlich können auch die optimalen Versuchsbedingungen bei der elektrochemischen Beschichtung von Turbinenschaufeln oder anderen Bauteilen getestet werden.

Eine andere Möglichkeit liegt in der Nutzung des Reaktorenarrays beim Auffinden der optimalen Bedingungen für die Herstellung von porösem Silizium beispielsweise auf einen Wafer. Diese Anwendung ist besonders vorteilhaft, da durch die Einstellung der Reaktionsparameter bei der Herstellung von porösem Silizium mittels Flusssäure die unterschiedlichsten Eigenschaften des porösen Siliziums erreicht werden können. Das poröse Silizium kann beispielsweise als Opferstruktur zum anschließenden Herausätzen mittels anderer Ätzmittel vorgesehen sein. Abhängig von der erzeugten Porengröße kann das poröse Silizium auch Trägerwerkstoff für die Anbindung bestimmter Stoffe sein, wobei die Poren vorteilhaft die zur Verfügung stehende Oberfläche vergrößern. Unter besonderen Bedingungen kann auch eine Leuchtfähigkeit des porösen Siliziums erreicht werden. Auch ist es denkbar, durch Einstellung der Reaktionsparameter ein so genantes Elektropolieren der Oberfläche zu erreichen.

Selbstverständlich müssen die Materialien des Reaktorenarrays in geeigneter Weise ausgewählt werden, damit die ablaufenden Reaktionen nur an der zu testenden Oberfläche stattfinden - also eine Reaktion von Elementen des Reaktorenarrays mit dem Reaktionsmedium verhindert wird. Die Abdichtung der einzelnen Reaktoren untereinander, die durch die Abdichtung der Reaktionsöffnungen für die Oberfläche erfolgt, gewährleistet, dass sich die einzelnen ablaufenden Reaktionen untereinander nicht beeinflussen.

Gemäß einer vorteilhaften Ausgestaltung der Erfindung ist vorgesehen, dass die Reaktionsräume zusätzlich mit jeweils einer Referenzelektrode ausgestattet sind. Hierdurch wird vorteilhaft ermöglicht, dass die in den Reaktionsräumen ablaufenden Reaktionen unter Einstellung eines bestimmten Potenzials erfolgen können, da die Referenzelektroden durch die in den Reaktionsräumen ablaufenden elektrochemischen Reaktionen nicht nennenswert beeinflusst werden.

Weiterhin kann vorteilhaft vorgesehen werden, dass die Gegenelektroden und/oder die Referenzelektroden in einer Deckelstruktur untergebracht sind, mit der Einfüllöffnungen des Reaktionsraumes für das Reaktionsmedium verschlossen sind. Die Unterbringung der Elektroden in der insbesondere elektrisch isolierenden Deckelstruktur ermöglicht vorteilhaft eine besonders einfache Handhabung des Reaktorenarrays. Außerdem wird die Wahrscheinlichkeit von Bedienungsfehlern verringert, da die Elektroden auf der Deckelstruktur unabhängig von einer Befüllung der Reaktionsräume verkabelt werden können. Die Deckelstruktur ermöglicht weiterhin vorteilhaft, dass die Einfüllöffnungen für das Reaktionsfluid gleichzeitig als Zuführöffnungen für die Elektroden verwendet werden können.

Eine weiterführende Ausgestaltung der Erfindung sieht vor, dass die Trägerplatte und flächig an diese angrenzende Bauteile, insbesondere die Deckelstruktur, biegeelastisch ausgeführt sind. Hierdurch lässt sich vorteilhaft der Bauteilverbund aus Reaktorenarray und evtl. aus flächig an diesen angrenzenden weiteren Bauteilen optimal an eine Kontur der Oberfläche anpassen, und es können beispielsweise gewisse Unebenheiten der Oberfläche überbrückt werden. Besonders bei Untersuchungen an Turbinenschaufeln ist die Verwendung einer biegeelastischen Trägerplatte besonders vorteilhaft, da diese aufgrund ihres Tragflächenprofils in erster Näherung in einer Richtung gekrümmt sind. Dieser Krümmung kann die zweidimensional sich erstreckende Trägerplatte aufgrund ihres biegeelastischen Verhaltens ohne weiteres angepasst werden.

Eine andere Ausgestaltung der Erfindung sieht vor, dass die Abdichtung durch eine die Kontaktseite abdeckende Dichtmatte gebildet ist, in der die Reaktionsöffnungen als Durchgänge ausgebildet sind. Diese Dichtmatte kann vorteilhaft ebenfalls zum Ausgleichen gewisser Unebenheiten auf der zu untersuchenden Oberfläche genutzt werden, was besonders vorteilhaft ist, wenn bereits korrodierte Oberflächen wie die von gebrauchten Turbinenschaufeln untersucht werden sollen. Außerdem wird durch die Dichtmatte eine optimale Dichtwirkung zwischen den einzelnen Reaktionsräumen erreicht, da die gesamte sich zwischen den Reaktionsöffnungen befindende Fläche durch den Andruck der Dichtmatte zur Erzielung der Dichtwirkung zur Verfügung steht.

Es ist weiterhin vorteilhaft, wenn die Dichtmatte mit ihrer freien Seite entsprechend dem Profil einer unebenen Oberfläche, auf der sie aufgesetzt werden soll, ausgebildet ist. Durch eine Anpassung der Dichtmatte an das Profil der unebenen Oberfläche wird vorteilhaft erreicht, dass der zu erzeugende Dichtdruck auf die Dichtmatte unabhängig von der unebenen Oberfläche an allen Stellen gleich hoch ausgebildet werden kann. Die Anpassung an die Oberfläche lässt sich beispielsweise bei der Untersuchung von Bauteilen bekannter Geometrie dadurch erzeugen, dass der Dichtmatte durch ein geeignetes Verfahren, wie beispielsweise Gießen, die Negativform des Bauteils bekannter Geometrie verliehen wird. Eine andere Möglichkeit besteht vorteilhaft darin, die Dichtmatte z. B. durch Gießen direkt auf der zu untersuchenden Oberfläche herzustellen, wodurch automatisch deren Profil übernommen wird, auch wenn dessen Geometrie nicht bekannt ist.

Weitere Einzelheiten der Erfindung werden im Folgenden anhand der Zeichnung beschrieben. Dabei werden gleichen oder sich entsprechenden Zeichnungselementen jeweils dieselben Bezugszeichen zugeordnet, wobei eine Erläuterung nur einmalig erfolgt soweit sich Übereinstimmungen ergeben. Es zeigen
- Figur 1: den Schnitt durch ein Ausführungsbeispiel des erfindungsgemäßen Reaktorenarrays, welches biegeelastisch ausgeführt ist und
- Figur 2: ein Ausführungsbeispiel des erfindungsgemäßen Reaktorenarrays, bei dem eine an die Kontur der zu untersuchenden Oberfläche angepasste Dichtmatte verwendet wird, im Schnitt.

Ein Reaktorenarray 11 weist als Grundkörper eine Trägerplatte 12 auf, in der Reaktionsräume 13 als Durchgänge ausgebildet sind. Diese Durchgänge sind nach oben hin mit Stopfen 14 verschlossen, welche in einer zentralen, nicht näher dargestellten Bohrung Gegenelektroden 15 aufnehmen, die in die Reaktionsräume 13 hineinreichen.

Die Trägerplatte 12 ist biegeelastisch ausgeführt, so dass sie mit einer Kontaktseite 16 auf die Oberfläche 17 eines zu untersuchenden Bauteils 18 aufgesetzt werden kann, auch wenn diese eine nicht ebene Kontur aufweist. Das Bauteil 18 könnte beispielsweise eine Turbinenschaufel sein, die in einer Richtung gekrümmt ist. Mit Dichtringen 19 für die Oberfläche, die in einem am Rand der Reaktionsräume 13 ausgebildeten Absatz untergebracht sind, werden die Reaktionsräume 13 gegenüber der Oberfläche 17 abgedichtet, so dass sich in den Reaktionsräumen unabhängig voneinander befüllbare Kavitäten bilden.

Der Betrieb des Reaktorenarrays erfolgt dadurch, dass die Trägerplatte 12 mit ihrer Kontaktseite 16 auf die Oberfläche 17 aufgesetzt wird und danach ein Reaktionsmedium in Form von Elektrolyten unterschiedlicher Zusammensetzung durch Einfüllöffnungen 21 in die Reaktionsräume 13 eingefüllt werden. Anschließend werden die Einfüllöffnungen 21 mit den Stopfen 14 verschlossen, wobei die in den Stopfen 14 befindlichen Gegenelektroden 15 mit ihren Enden jeweils in das Reaktionsmedium 20 eintauchen. Durch Anlegen eines Potenzials P an das Bauteil wird dieses in den Bereichen, die mit den Reaktionsräumen 13 in Kontakt stehen, zur Arbeitselektrode. An die Gegenelektroden können unterschiedliche Potenziale P1, P2, P3 angelegt werden, um unterschiedliche Reaktionsbedingungen in den einzelnen Reaktionsräumen zu erzeugen. Die erzielten Reaktionsergebnisse sind untereinander vergleichbar, da die Reaktionsräume jeweils Reaktionsöffnungen 22 vergleichbarer Geometrie ausbilden, so dass unterschiedliche Reaktionsergebnisse direkt auf die Variation der Reaktionsparameter (anliegendes Potenzial, Zusammensetzung des Elektrolyts) zurückzuführen sind.

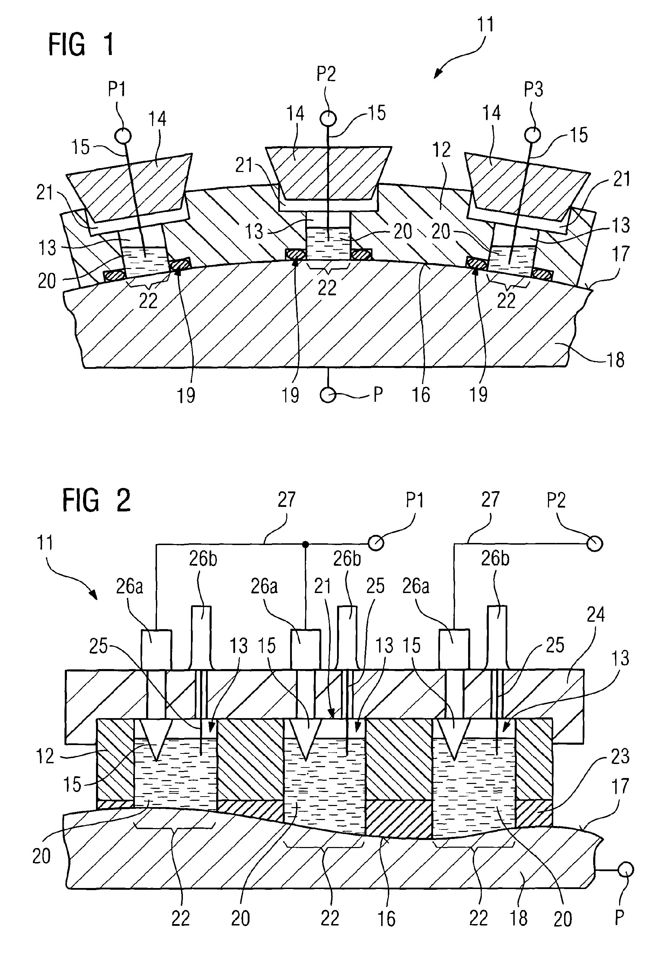

Bei dem Reaktorenarray 11 gemäß Figur 2 ist die Abdichtung durch eine Dichtmatte 23 gebildet, welche an der der Oberfläche 17 zugewandten Seite der Trägerplatte 12 anliegt und unter Nachbildung der Kontur der Oberfläche 17 die Kontaktseite 16 des Reaktorenarrays bildet. Hierdurch werden Toleranzen aufgrund einer welligen Oberfläche des Bauteils 18 ausgeglichen.

Die Einfüllöffnungen 21 der Trägerplatte 12 sind durch eine Deckelstruktur 24 verschlossen, in der weiterhin die Gegenelektroden 15 sowie Referenzelektroden 25 befestigt sind. Diese reichen durch die Deckelstruktur hindurch im Bereich der Einfüllöffnungen 21 in die Reaktionsräume 13 und tauchen in das Reaktionsmedium 20 ein. Außerhalb der Deckelstruktur 24 weisen die Gegenelektroden 15 Kontaktstücke 26a und die Referenzelektroden Kontaktstücke 26b für eine elektrische Kontaktierung auf. Für die Kontaktstücke 26a der Gegenelektroden 15 sind Kontaktierungsbeispiele 27 angedeutet, denen entnommen werden kann, dass sich die Elektroden 15 einzeln oder gruppenweise an Potenziale P1, P2 anschließen lassen.

Das Bauteil 18 ist an das Potenzial P angelegt. In diesem Ausführungsbeispiel sollen verschiedene Beschichtungsparameter für die als Arbeitselektrode fungierende Oberfläche des Bauteils 18 gefunden werden, so dass das Bauteil die Kathode und die Gegenelektroden 15 jeweils die Anode bilden.

## Patentansprüche

1. Reaktorenarray zum Testen von Reaktionen eines Reaktionsmediums (20) mit einer Oberfläche (17) bei unterschiedlichen Reaktionsparametern, aufweisend eine Trägerplatte (12) mit einer Kontaktseite (16) für die Oberfläche (17), in der Reaktionsräume (13) der Reaktoren mit zur Kontaktseite (16) gerichteten Reaktionsöffnungen (22) ausgebildet sind, wobei die Reaktionsöffnungen (22) eine Abdichtung (19, 23) für die Oberfläche (17) aufweisen,
**dadurch gekennzeichnet,**
**dass** die Reaktionsräume (13) mit jeweils einer Gegenelektrode (15) ausgestattet sind, wobei die Gegenelektroden (15) zur Einstellung unterschiedlicher Potentiale gegenüber der Oberfläche zumindest in Gruppen unabhängig voneinander elektrisch ansteuerbar sind.

2. Reaktorenarray nach Anspruch 1,
**dadurch gekennzeichnet,**
**dass** die Reaktionsräume zusätzlich mit jeweils einer Referenzelektrode (25) ausgestattet sind.

3. Reaktorenarray nach einem der Ansprüche 1 oder 2,
**dadurch gekennzeichnet,**
**dass** die Gegenelektroden (15) und/oder die Referenzelektroden (25) in einer Deckelstruktur (24) untergebracht sind, mit der Einfüllöffnungen (21) der Reaktionsräume (13) für das Reaktionsmedium (20) verschlossen sind.

4. Reaktorenarray nach einem der vorangehenden Ansprüche,
**dadurch gekennzeichnet,**
**dass** die Trägerplatte (12) und flächig an diese angrenzende Bauteile, insbesondere die Deckelstruktur (24) gemäß Anspruch 3, biegeelastisch ausgeführt sind.

5. Reaktorenarray nach einem der vorangehenden Ansprüche,
**dadurch gekennzeichnet,**
**dass** die Abdichtung durch eine die Kontaktseite (16) abdeckende Dichtmatte (23) gebildet ist, in der die Reaktionsöffnungen (22) als Durchgänge ausgebildet sind.

6. Reaktorenarray nach Anspruch 5,
**dadurch gekennzeichnet,**
**dass** die Dichtmatte (23) mit ihrer freien Seite entsprechend dem Profil einer unebenen Oberfläche, auf der sie aufgesetzt werden soll, ausgebildet ist.
